# EUROPÄISCHE PATENTANMELDUNG

(11) **EP 0 827 918 A2**
(43) Veröffentlichungstag der Anmeldung: **11.03.1998**
(21) Anmeldenummer: 97115241.8
(22) Anmeldetag: 03.09.1997
(51) Int. Cl.: B65G 15/58

(54) **Förderband für einen Endlosförderer mit Unterdruckeinrichtung**

(30) Priorität: 06.09.1996 DE 19636161
(71) Anmelder: NSM MAGNETTECHNIK GMBH, D-59399 Olfen (DE)
(72) Erfinder: Ulrich, Hans, 59379 Selm (DE); Kulik, Gerhard, 59439 Holzwickede (DE)
(74) Vertreter: Hennicke, Ernst Rüdiger

(57) **Zusammenfassung**

Das erfindungsgemäße Förderband (13) für einen Unterdruckförderer (10) ist an seiner den zu transportierenden Werkstücken (17) zugewandten Transportseite mit einer Dichtschicht (22) aus weichelastischem Material versehen, in der eine Vielzahl von hintereinander angeordneten Unterdruckvertiefungen (30) angeordnet sind, die eine große Ansaugfläche 31, aber nur ein geringes Volumen haben. Damit ist es möglich, den zum Halten der Transportgegenstände erforderlichen Unterdruck in den Vertiefungen sehr schnell aufzubauen, wobei die weichelastische Dichtschicht eine besonders wirksame Abdichtung gegenüber der Umgebung schafft, so daß die Druckverluste im Unterdruckförderer vergleichsweise gering sind und auch schwere Güter sicher transportiert werden können.

## Beschreibung

Die Erfindung betrifft ein Förderband für einen Endlosförderer mit Unterdruckeinrichtung.

Insbesondere in der blechverarbeitenden Industrie stellt sich häufig die Aufgabe, Bleche oder Werkstücke aus Blech wie z.B. Dosendeckel, Stanzteile in der Automobilindustrie o.dgl. hängend von einer Verarbeitungsstation zu einer weiteren Station zu transportieren. Für ferromagnetische Werkstoffe werden im allgemeinen Magnetbandförderer verwendet, bei denen das Förderband zwischen den einzelnen Magneten und den zu transportierenden Blechen angeordnet ist und bei seinem Umlauf um die Umkehrrollen die von den Magneten gehaltenen Bleche mitnimmt.

Bei nicht magnetischen Werkstoffen wie z.B. Aluminiumblechen, Kunststofftafeln oder Holzverbundwerkstoffen ist der Transport mit Magnetförderern nicht möglich; man verwendet hier Endlosförderer mit Unterdruckeinrichtung, bei denen die zu transportierenden Bauteile gegen das Förderband gesaugt werden. Die Fördereinrichtungen sind hierzu mit einem an der Fördererunterseite angeordneten Unterdruckkanal versehen, der mit einer Vakuumpumpe o.dgl. verbunden ist und der zur Seite des Förderbandes hin offen ist.

Die für solche Unterdruckförderer bekannten Förderbänder sind im Bereich des Unterdruckkanals mit einzelnen, im Abstand voneinander angeordneten Löchern mit vergleichsweise großem Durchmesser versehen, über die die zu transportierenden Werkstücke an das Förderband angesaugt werden. Die bekannten Förderbänder haben dabei den Nachteil, daß die Abdichtung zwischen Band und transportiertem Werkstück nur unzureichend ist und dazwischen viel Falschluft angesaugt wird, so daß die Leistung der Unterdruckpumpe sehr groß sein muß, um den für einen sicheren Transport erforderlichen Unterdruck überhaupt zu erzeugen. Insbesondere wenn eines oder mehrere der im Förderer angeordneten Löcher nicht durch ein transportiertes Blech, Kunststofftafel o.dgl. abgedeckt wird, kann durch diese freiliegenden Löcher eine große Menge Falschluft angesaugt werden, so daß der erforderliche Unterdruck an den anderen, Bauteile haltenden Löchern nicht aufrechterhalten werden kann und dann alle transportierten Werkstücke während des Transports vom Förderer herunterfallen. Aus diesen Gründen gestaltet sich auch das Anfahren von derartigen Unterdruckförderern nach einem Maschinenstillstand als sehr schwierig, so daß solche Förderer im allgemeinen nur für besonders leichtgewichtige Fördergüter verwendet werden, die auch bei nur geringem Unterdruck an den Löchern noch zuverlässig am Förderband haften.

Es ist auch bereits ein Förderband vorgeschlagen worden, bei dem die einzelnen Löcher von etwa quadratischen, auf der Transportfläche des Förderbandes aufgesetzten Dichtringen umgeben wurden, die eine zu den Werkstücken hin offene Vakuumkammer bilden und die eine bessere Abdichtung zwischen Werkstück und Förderband sicherstellen sollen. Bei solchen Förderbändern besteht jedoch das Problem, daß das Volumen der von den Dichtringen gebildeten Vakuumkammern sehr groß ist und während der Zeit, in der die dann von den Werkstücken abgedeckten Kammern auf den erforderlichen Unterdruck evakuiert werden, die Werkstücke weiter von unten gegen das Band gedrückt gehalten werden müssen. Sobald eine der Kammern kein Werkstück trägt, also nicht verschlossen ist, kann durch diese wieder eine große Menge Falschluft angesaugt werden mit den bereits erläuterten, nachteiligen Folgen.

Aufgabe der Erfindung ist es vor allem, ein Förderband für Unterdruckförderer zu schaffen, bei dem nur wenig Falschluft im Vergleich zu den herkömmlichen Förderbändern angesaugt wird und der Unterdruck zwischen Förderband und Fördergut besonders schnell aufgebaut wird und zuverlässig erhalten bleibt

Diese Aufgabe wird mit der Erfindung durch eine an der Transportseite des Förderbandes angeordnete Dichtschicht mit einer Vielzahl von in Durchlaufrichtung des Förderbandes hintereinander angeordneten Unterdruckvertiefungen gelöst, deren Ansaugfläche groß im Verhältnis zu ihrem Volumen ist und die über Saugkanäle von der Rückseite des Förderbandes zugänglich sind. Die Unterdruckvertiefungen haben dabei zweckmäßig einen kreisförmigen Querschnitt und können so durch einfaches Ausfräsen o.dgl. aus der Dichtschicht hergestellt werden.

Nach der Erfindung sind im Förderband also keine Löcher mit großem Querschnitt oder großvolumige Unterdruckkammern mehr vorgesehen, sondern Unterdruckvertiefungen, die aufgrund ihrer großen Ansaugfläche bei gleichzeitig nur geringem Volumen die erforderlichen Ansaugkräfte auf die zu transportierenden Werkstücke praktisch unmittelbar nach deren Anlage an das Förderband übertragen, da die Evakuierung des dann entstehenden, kleinen Hohlraums über die Saugkanäle sehr schnell erfolgt. Da die Saugkanäle selbst nur einen geringen Querschnitt bzw. Durchmesser haben, der beispielsweise zwischen 1 und 5 mm betragen kann, ist die Menge der dadurch angesaugten Falschluft nur gering, auch wenn die Unterdruckvertiefungen an ihrer Transportseite offen bleiben, wenn z.B. kein Werkstück der Fördereinrichtung zum Weitertransport zugeführt wird. Ein Verlust des Unterdruckes in der gesamten Fördereinrichtung bei einigen keine Werkstücke ansaugenden Unterdruckvertiefungen tritt daher nicht auf, zumindest nicht so schnell wie bei den bislang bekannten Förderbändern; bei gleicher Leistung der in der Fördereinrichtung installierten Unterdruckeinrichtung wird mit dem erfindungsgemäßen Förderband ein stärkerer Unterdruck an den zu transportierenden Blechen, Platten o.dgl. erreicht, der je nach Länge und Ausführung des Bandes im Bereich von 0,2 bis 0,4 bar liegen kann. Somit ist es nunmehr auch möglich, schwere Bauteile zuverlässig mit einem Unterdruckförderer hängend zu transportieren.

Das Verhältnis vom Durchmesser der kreisförmigen Unterdruckvertiefungen zu ihrer Tiefe beträgt vorzugsweise mindestens 20. Bei einem derartigen Durchmesser/Tiefenverhältnis würde das Volumen der Vertiefung mit 1 mm Tiefe nur 0,314 cm³ betragen bei einer wirksamen Ansaugfläche von 3,14 cm². Mit einer solchen Unterdruckvertiefung könnte bei einem Differenzdruck zur Umgebung von nur 0,2 bar eine theoretische Ansaugkraft von 6,28 N erreicht werden; wenn das Verhältnis von Durchmesser zu Tiefe weiter vergrößert wird, steigt die Ansaugfläche und damit die Ansaugkraft schneller an als das Volumen der Ansaugvertiefung.

Das Förderband besteht zweckmäßig aus einem Trägerband und der damit verbundenen Dichtschicht, so daß diese beiden Bandteile bei der Materialauswahl optimal auf ihre Funktion - Abdichten einerseits und Übertragung der Transportkräfte andererseits - abgestimmt werden können. So kann die Dichtschicht zweckmäßig aus einem weichelastischen Material bestehen mit einer Shore-Härte im Bereich zwischen 20 und 60, während das Trägerband selbst ein als solcher bei Magnetbandförderern häufig verwendeter Gummi- oder Kunststoffgurt mit Textileinlagen oder eingelegten Stahllitzen ist. Das weichelastische Material für die Dichtschicht kann beispielsweise ein Gummiwerkstoff oder Polyurethan sein, das auf die Tragschicht aufgeschäumt und so fest mit dieser verbunden ist.

In bevorzugter Ausgestaltung der Erfindung ist das Förderband an seiner Rückseite beidseits seiner Längskanten mit Zahnungen für den Eingriff von Umlenkzahnrädern und mit einer dazwischen angeordneten Nut versehen, in die die Saugkanäle münden. In die Nut kann dann eine am Förderer angeordnete Führungsleiste eingreifen, die gleichzeitig einen zum Förderband hin offenen Unterdruckkanal aufweist, der dann über eine geeignete Leitung mit der Unterdruckeinrichtung verbunden ist. Die beidseits von der Nut liegenden Zahnungen sorgen für einen schlupffreien Umlauf des Bandes um die Umlenk- bzw. Antriebsrollen der Fördereinrichtung.

Besonders vorteilhaft ist es, wenn zwischen den Zahnungen und der Nut Dichtstege vorgesehen sind, die für eine wirksame Abdichtung zwischen Förderband und der in die Nut eingreifenden Führungsleiste sorgen, so daß die Druckverluste in diesem Bereich nur gering sind. Das Trägerband kann zweckmäßig mit seinen Längskanten beidseitig ein Stück über die Dichtschicht überstehen; unter diesen beidseitigen Überstand können dann am Förderer angeordnete Andruckleisten fassen, die das Förderband in dichter Anlage am Förderer halten und auch hier ein Ansaugen von Falschluft weitgehend unterbinden.

Die Unterdruckvertiefungen sind vorzugsweise in geringem Abstand voneinander angeordnet, zweckmäßig in einem Abstand, der nicht größer ist als ihr Durchmesser bzw. - bei nicht kreisförmigen Vertiefungen - als ihre größte Längenabmessung parallel zur Bandoberfläche.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert ist. Es zeigt:
- Fig. 1: einen Endlosförderer mit einer Unterdruckeinrichtung in einer schematischen Seitenansicht;
- Fig. 2: das erfindungsgemäße Förderband in einem Querschnitt;
- Fig. 3: den Gegenstand der Fig. 2 in einer Draufsicht; und
- Fig. 4: den Gegenstand der Fig. 2 und 3 in einer Seitenansicht, teilweise im Schnitt.

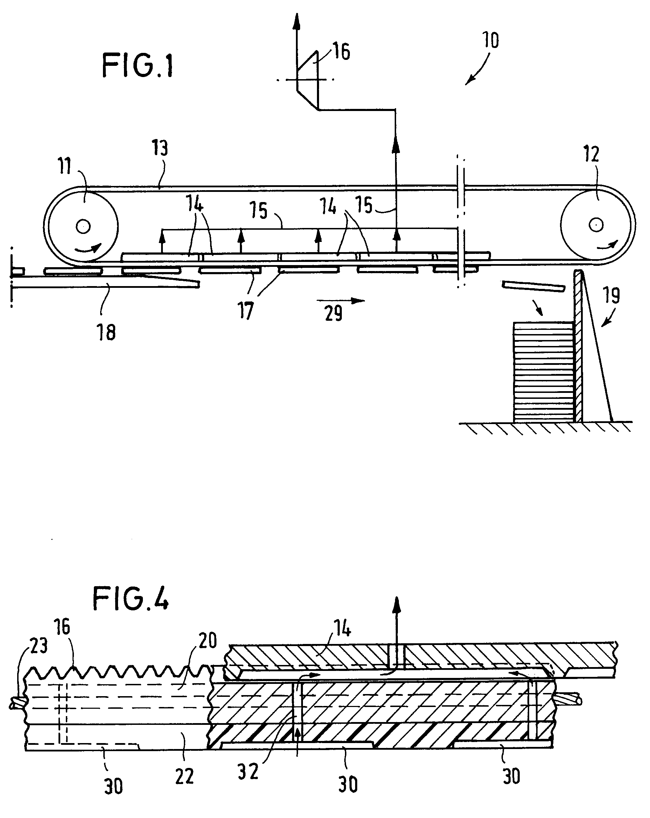

In Fig. 1 bezeichnet 10 eine Unterdruckfördereinrichtung mit einer angetriebenen, ersten und einer zweiten Umlenkrolle 11 bzw. 12 für ein Förderband 13, das im weiteren beschrieben wird. Die Fördereinrichtung 10 ist mit mehreren Unterdruckelementen 14 versehen, die über Unterdruckleitungen 15 an eine Unterdruckeinrichtung 16, hier in Form eines Verdichters angeschlossen sind.

Anstelle an den Verdichter könnten die Unterdruckelemente auch an eine andere geeignete Unterdruckeinrichtung angeschlossen sein, beispielsweise in den engsten Querschnitt von einer oder mehreren Venturidüsen münden, die mit Druckluft durchströmt werden und wegen der hohen Strömungsgeschwindigkeit im engsten Querschnitt dort nur einen sehr geringen statischen Druck haben.

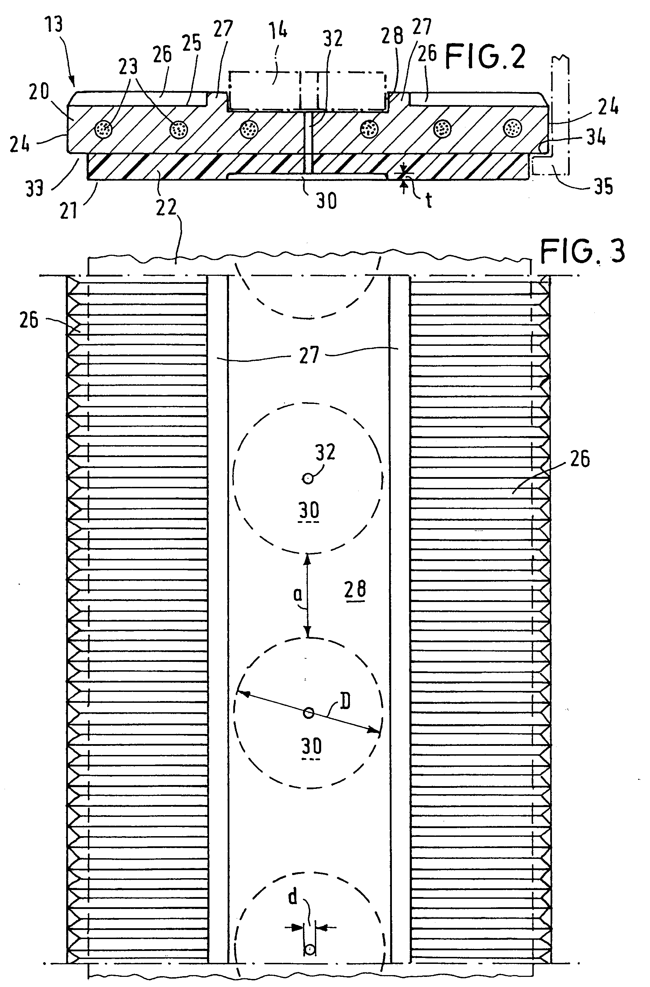

Die Fördereinrichtung 10 dient für den Transport von ebenen, flächigen Werkstücken, beispielsweise von Aluminiumblechen 17, die z.B. von einer (nicht dargestellten) Stanzeinrichtung der Fördereinrichtung 10 liegend mittels einer Zufuhrrampe 18 zugeführt und von unten gegen das Förderband 13 gedrückt werden, wo sie von dem in den Unterdruckelementen 14 herrschenden Unterdruck angesaugt werden und so während ihres Transportes zu einer Abwurfstelle 19 nicht unerwünscht vom Förderer herabfallen können. Die Erfindung ist auf die besondere Ausgestaltung des Förderbandes 13 gerichtet, das mehr im einzelnen in den Fig. 2 bis 5 dargestellt ist.

Wie sich insbesondere aus Fig. 2 ergibt, besteht das Förderband 13 im wesentlichen aus einem innenliegenden, d.h. an den Umlenkrollen 11, 12 anliegenden Trägerband 20 und einer mit diesem an der den Blechen 17 zugewandten Transportseite 21 verbundenen Dichtschicht 22. Das Trägerband 20 ist im vorliegenden Fall ein mit Stahllitzen 23 verstärkter Kunststoffgurt. Beidseits seiner Längskanten 24 ist er an seiner Rückseite 25 mit Zahnungen 26 für den Eingriff der ebenfalls (teilweise) gezahnten Umlenkrollen 11, 12 versehen. Die Zahnungen sind an ihrem inneren Ende mit Dichtstegen 27 versehen, die eine mittig an der Rückseite 25 des Förderbandes 13 angeordnete Nut 28 beidseitig begrenzen. Im montierten Zustand des Förderbandes in der Fördereinrichtung greifen die Unterdruckelemente 14 mit wenig Spiel quer zur Förderrichtung 29 in die Nut 28 ein, wie dies in Fig. 2 gestrichelt dargestellt ist.

Die mit dem Trägerband 20 fest verbundene Dichtschicht 22 besteht aus einem weichelastischen Material mit einer Shore-Härte im Bereich zwischen 20 und 60, beispielsweise aus einem geeigneten Polyurethanwerkstoff, das auf dem Trägerband 20 aufgeschäumt und so fest mit diesem verbunden ist. An seiner freien Transportseite 21 ist die Dichtschicht 22 mit einer Vielzahl von in Förderrichtung 29 hintereinander angeordneten Unterdruckvertiefungen 30 versehen, die bei der dargestellten Ausführungsform einen kreisförmigen Querschnitt haben und in einem Abstand a voneinander in der Dichtschicht angeordnet sind, der kleiner ist als ihr Durchmesser D. Dieser Durchmesser D bestimmt die Größe der Ansaugfläche 31 der Vertiefungen 30, die bei einem Durchmesser von 50 mm etwa 19,5 cm² beträgt; der Durchmesser ist groß im Verhältnis zu der Tiefe t der Vertiefungen 30 in der Dichtschicht 22, die hier lediglich 1 mm beträgt.

Jede Unterdruckvertiefungen 30 steht über einen Saugkanal 32 mit der Nut 28 in der Rückseite des Förderbandes 13 in Verbindung und kann so von den Unterdruckelementen 14 mit Unterdruck beaufschlagt werden. Der Saugkanal 32 hat nur einen kleinen Durchmesser d zwischen 1 und 5 mm. Dieser kleine Durchmesser und die nur geringe Tiefe t der Unterdruckvertiefung 30 sind der Grund dafür, daß von den Unterdruckelementen 14 nur ein geringes Luftvolumen aus der Unterdruckvertiefung 30 abgesaugt werden muß, um eine gewünschte Druckdifferenz zwischen dem Umgebungsdruck und dem Druck in der Vertiefung 30 und damit den erforderlichen Anpreßdruck auf das transportierte Blech 17 zu erreichen. Trotz der großen Ansaugfläche 31 einer jeden Unterdruckvertiefung 30 ist es daher mit dem Förderband nach der Erfindung möglich, den gewünschten Unterdruck in sehr kurzer Zeit aufzubauen, was durch das weichelastische Dichtmaterial um die Unterdruckvertiefungen 30 herum noch begünstigt wird, die ein Ansaugen von Falschluft in diesem Bereich weitgehend verhindern. Es ist daher ausreichend, die zu transportierenden Bleche nur kurz von unten gegen das Förderband zu halten, um den Aufbau von Unterdruck und damit den sicheren Weitertransport der Bauteile hängend zu gewährleisten.

Da die Saugkanäle 32 nur einen geringen Durchmesser d haben, ist die Menge der dadurch angesaugten Falschluft nur gering, wenn während des Umlaufes des Transportbandes einzelne Vertiefungen 30 nicht von zu transportierenden Blechen verschlossen sind. Es ist daher nicht unbedingt erforderlich, dafür Sorge zu tragen, daß im Betrieb immer alle von den Unterdruckelementen 14 beaufschlagten Unterdruckvertiefungen 30 auch tatsächlich beim Transport der Bleche 17 beteiligt sind, also jede Vertiefung von einem Blech 17 verschlossen ist.

Wie aus Fig.2 ersichtlich ist, ragt das Trägerband 20 mit seinen Längskanten 24 an beiden Seiten des Förderbandes 17 ein Stück 33 über die Dichtschicht 22 vor und bildet so Anlageflächen 34 für am Förderer 10 angeordnete Halteprofile 35, die ein Durchhängen des Förderbandes verhindern, indem sie es von unten gegen die Unterdruckelemente 14 drücken. Auf diese Weise wird auch der Eintritt von Falschluft zwischen Förderband 13 und Unterdruckelementen 14 wirksam verhindert.

Man erkennt, daß es mit einer Fördereinrichtung bei gleicher, installierter Leistung für die Unterdruckeinrichtung mit dem erfindungsgemäßen Förderband gegenüber einer Anlage mit alten Förderband möglich ist, schwerere Bauteile mit größerer Sicherheit zu transportieren und eine sehr schnelle Übernahme des Bauteils von der Zufuhreinrichtung zu gewährleisten, da der für den Transport erforderliche Unterdruck sehr schnell aufgebaut werden kann und wegen der vergleichsweise geringen Druckverluste leicht aufrechterhalten werden kann. Das Transportband kann daher besonders vorteilhaft bei solchen Unterdruckfördereinrichtungen verwendet werden, die einzeln steuerbare Unterdruckelemente aufweisen, die separat mit Unterdruck beaufschlagt bzw. von dem Unterdruckerzeuger abgekoppelt werden können, um einen Abwurf der transportierten Bleche an praktisch jeder beliebigen Stelle auf dem Förderweg durch kurzes Abschalten des Vakuums zu ermöglichen.

## Patentansprüche

1. Förderband für einen Endlosförderer mit Unterdruckeinrichtung, **gekennzeichnet durch** eine an der Transportseite (21) des Förderbandes (13) angeordnete Dichtschicht (22) mit einer Vielzahl von in Durchlaufrichtung (29) des Förderbandes (13) hintereinander angeordneten Unterdruckvertiefungen (30), deren Ansaugfläche (32) groß im Verhältnis zu ihrem Volumen ist und die über Saugkanäle (32) von der Rückseite (25) des Förderbandes (13) zugänglich sind.

2. Förderband nach Anspruch 1, **dadurch gekennzeichnet**, **daß** die Unterdruckvertiefungen (30) einen kreisförmigen Querschnitt aufweisen.

3. Förderband nach Anspruch 2, **dadurch gekennzeichnet**, **daß** das Verhältnis vom Durchmesser (D) der kreisförmigen Unterdruckvertiefungen (30) zu ihrer Tiefe (t) mindestens 20 beträgt.

4. Förderband nach einem der Ansprüche 1 bis 3, **dadurch gekennzeichnet**, **daß** es im wesentlichen aus einem Trägerband (20) und der damit verbundenen Dichtschicht (22) besteht.

5. Förderband nach einem der Ansprüche 1 bis 4, **dadurch gekennzeichnet**, **daß** die Dichtschicht (22) aus weichelastischem Material mit einer Shore-Härte zwischen 20 und 60 besteht.

6. Förderband nach einem der Ansprüche 1 bis 5, **dadurch gekennzeichnet**, **daß** die Dichtschicht (22) aus Gummi besteht.

7. Förderband nach einem der Ansprüche 1 bis 5, **dadurch gekennzeichnet**, **daß** die Dichtschicht (22) aus Polyurethan besteht.

8. Förderband nach einem der Ansprüche 1 bis 7, **dadurch gekennzeichnet**, **daß** er an seiner Rückseite (25) beidseits seiner Längskanten (24) mit Zahnungen (26) für den Eingriff von Umlenkzahnrädern (11,12) und mit einer zwischen den Zahnungen angeordneten Nut (28) versehen ist, in die die Saugkanäle (32) münden.

9. Förderband nach einem der Ansprüche 1 bis 8, **dadurch gekennzeichnet**, **daß** zwischen den Zahnungen (26) und der Nut (28) Dichtstege (27) vorgesehen sind.

10. Förderband nach einem der Ansprüche 1 bis 9, **dadurch gekennzeichnet**, **daß** das Trägerband (20) mit seinen Längskanten (24) beidseitig ein Stück (33) über die Dichtschicht (22) übersteht.

11. Förderband nach einem der Ansprüche 1 bis 10, **gekennzeichnet**, **durch** im Bereich seiner Längskanten (24) angeordnete, mit am Förderer (10) angebrachten Haltewinkeln (35) zusammenwirkende Abdichtbereiche (33).

12. Förderband nach einem der Ansprüche 1 bis 11, **dadurch gekennzeichnet**, **daß** die Unterdruckkammern (30) in einem Abstand (a) voneinander angeordnet sind, der nicht größer ist als ihre größte Längenabmessung (D) parallel zur Bandoberfläche (21).

13. Förderband nach einem der Ansprüche 1 bis 12, **dadurch gekennzeichnet**, **daß** das Trägerband (20) mit Stahllitzen (23) o.dgl. verstärkt ist.
